# EUROPEAN PATENT APPLICATION

(11) **EP 3 115 949 A1**
(43) Date of publication of application: **11.01.2017**
(21) Application number: 16175974.1
(22) Date of filing: 23.06.2016
(51) Int. Cl.: G06Q 10/10, G06Q 10/06

(54) **SCHEDULING METHOD, INFORMATION PROCESSING APPARATUS, AND SCHEDULING PROGRAM**

(30) Priority: 07.07.2015 JP 2015136538
(71) Applicant: FUJITSU LIMITED, Kawasaki-shi Kanagawa 211-8588 (JP)
(72) Inventor: TAIRA, Kei, Kawasaki-shi, Kanagawa 211-8588 (JP); NODA, Masahide, Kawasaki-shi, Kanagawa 211-8588 (JP); OHNO, Takashi, Kawasaki-shi, Kanagawa 211-8588 (JP)
(74) Representative: Ward, Gregory Peter

(57) **Abstract**

A scheduling support device (1) creates, on the basis of an execution sequence of a plurality of tasks defined by a plurality of pieces of task information (111), a first schedule related to the tasks; determines, when a new task defined by new task information (111) is detected, the similarity between the task information (111) on the detected new task and the pieces of the task information (111) that define the tasks constituting the first schedule; decides, on the basis of the determined similarity, a candidate for an execution plan for the new task; and creates, on the basis of the execution sequence and the task information (111) on the tasks in the first schedule and on the basis of the task information (111) on the new task, a second schedule by deciding an execution plan for the new task from candidates for the execution plan for the new task.

## Description

### FIELD

The embodiment discussed herein is related to a scheduling method or the like.

### BACKGROUND

As electronic tools for recording action plans of persons, there is a schedule management tool for electronic schedule books that are stored in personal mobile terminal devices or in shared terminal devices that can be accessed by a plurality of persons. In the electronic schedule books, planned start time and planned end time of the action content (hereinafter, referred to as a "task") that is performed by users of the electronic schedule books are stored. A user of an electronic schedule book can manage the own schedules by displaying the content of the task on a display of, for example, a mobile terminal device and checking the displayed content.

Furthermore, there is a known conventional scheduling method of previously registering a grouping rule that define a combination of pieces of work that can be integrated. Then, when work is requested, it is determined whether the requested work information can be integrated with already issued work plan information that is related to work to be performed within execution time period and that is requested conforming to a grouping rule. Furthermore, there is a disclosed technology of work management devices that adjust, if it is determined that the work can be simultaneously performed, work persons in charge in common and the planed work day (for example, see Patent Document 1 and Patent Document 2). The work mentioned here corresponds to a task.
Patent Document 1: Japanese Laid-open Patent Publication No. 2007-193620
Patent Document 2: Japanese Laid-open Patent Publication No. 2006-155368

However, with the conventional schedule management, there is a problem in that it is difficult to perform scheduling of tasks that can be integrated in combination is not previously defined. Namely, in the work management device, if new work is not previously defined in a combination of work that can be integrated, when new work is requested, it is not possible to determine whether the new work can be integrated with the already issued work plan information. Consequently, the work management device is not able to perform scheduling of the new work that is not previously defined.

Accordingly, it is desirable to perform scheduling even if a task is not previously defined in tasks that can be integrated in combination.

### SUMMARY

According to an aspect of an embodiment, a scheduling method includes creating, performed by a computer, on the basis of an execution sequence of a plurality of tasks that are defined by a plurality of pieces of task information, a first schedule related to the plurality of tasks; determining, performed by the computer, when a new task defined by new task information is detected, the similarity between the task information on the detected new task and the plurality of pieces of task information that define the plurality of tasks that constitute the first schedule; deciding, performed by the computer, on the basis of the determined similarity, a candidate for an execution plan for the new task; and creating, performed by the computer, on the basis of the execution sequence and the task information on the plurality of tasks in the first schedule and on the basis of the task information on the new task, a second schedule by deciding an execution plan for the new task from among candidates for the execution plan for the new task.
The invention is further described, by way of example only, with reference to the following figures, in which:
FIG. 1 is a schematic diagram illustrating the configuration of a system that includes a scheduling support device according to an embodiment;
FIG. 2 is a functional block diagram illustrating the configuration of the scheduling support device according to the embodiment;
FIG. 3A is a schematic diagram illustrating an example of the content of task information according to the embodiment;
FIG. 3B is a schematic diagram illustrating another example of the content of task information of the embodiment;
FIG. 4 is a functional block diagram illustrating the configuration of a user interface device according to the embodiment;
FIG. 5 is a flowchart illustrating the flow of a scheduling support process according to the embodiment;
FIG. 6 is a flowchart illustrating the flow of a task scheduling process;
FIG. 7 is a flowchart illustrating the flow of a task scheduling process performed when a state change of a user is detected;
FIG. 8 is a schematic diagram illustrating a specific example of the task scheduling process according to the embodiment;
FIG. 9A is a schematic diagram (1) illustrating another specific example of the task scheduling process according to the embodiment;
FIG. 9B is a schematic diagram (2) illustrating another specific example of the task scheduling process according to the embodiment;
FIG. 9C is a schematic diagram (3) illustrating another specific example of the task scheduling process according to the embodiment;
FIG. 10 is a schematic diagram illustrating another configuration of the system that includes the scheduling support device according to the embodiment; and
FIG. 11 is a schematic diagram illustrating an example of a computer that executes a scheduling program.

Preferred embodiments of the present invention will be explained with reference to accompanying drawings. Furthermore, the present invention is not limited to the embodiment.

### Configuration of the scheduling support system

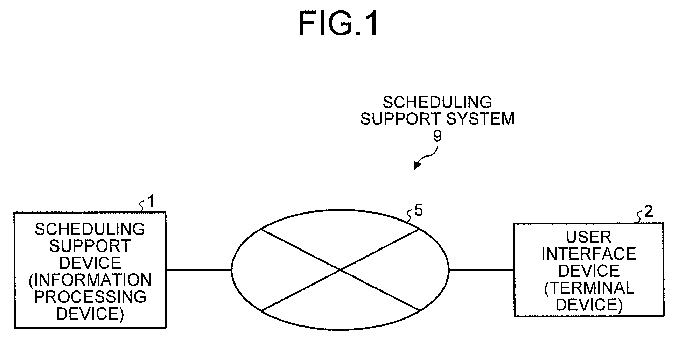

FIG. 1 is a schematic diagram illustrating the configuration of a system that includes a scheduling support device according to an embodiment. A scheduling support system 9 includes a scheduling support device 1 and a user interface device 2. The scheduling support device 1 is connected to the user interface device 2 via a network 5. Furthermore, the scheduling support device 1 corresponds to, as an example, an information processing apparatus

The user interface device 2 is an electronic device that can be used by an executor of a task and includes a sensor that is used to detect a state of the user. An example of a sensor includes, as an example, a biological sensor that can detect human stress. Furthermore, the user interface device 2 can allow the executor of the task to recognize the content of the task or the content of the schedule. Furthermore, the user interface device 2 can notify the scheduling support device 1 of the state of a user. The user interface device 2 corresponds to a mobile terminal device represented by a smart phone; however, the user interface device 2 is not limited to this. The user interface device 2 may also be a notebook type or a desktop type personal computer (Personal Computer), a notebook type or a desktop type PDA (Personal Digital Assistant), or the like.

The scheduling support device 1 determines the similarity between task information on a new task and task information on a plurality of tasks that have already been scheduled and decides, on the basis of the similarity, a candidate for an execution plan for the new task. Furthermore, on the basis of the execution sequence or task information on the plurality of already scheduled tasks and on the basis of task information on the new task, the scheduling support device 1 decides an execution plan for the new task from among the candidates for the execution plan for the new task and then creates a schedule. For example, the scheduling support device 1 creates a schedule for the new task continued from the plurality of tasks that are similar to the new task. This is because it is assumed that, if similar tasks are executed in series, the execution efficiency is increased. However, if the cumulative total of the required time calculated by using the task information on each of the tasks exceeds a threshold, the scheduling support device 1 divides a similar task group that includes therein the new task into a plurality pieces and creates a schedule. This is because it is assumed that, if similar tasks are executed for a long time, the execution efficiency is decreased due to, for example, weariness. Furthermore, the required time is described as an example of the item of the task information that is used to determine whether schedules are to be scheduled in series; however, the item of the task information is not limited to this. Furthermore, the scheduling support device 1 may also change, on the basis of the task information on each of the tasks, the created schedule when, for example, the power of concentration of a user is decreased.

The "task" mentioned here is used as a term that may include all of the actions performed by persons. An example of the "task" is work on business; however, the "task" is not limited to this and may also include an action, such as a private trip, having a meal together, or the like. Furthermore, the "task" can also include the action, such as a rest between a plurality of actions or moving to a specific location in order to execute the subsequent action. The "task information" mentioned here means information that defines the content of a task. The "task information" may also include the content of the specific work, an executor of a task, the time taken to execute a task, the location in which a task is executed, a tool that is used to execute a task, or the like. Furthermore, the "task information" may also include "task information" that defines the planned start time and the planned end time of a task and may also include "task information" that does not define the planned start time and the planned end time of a task. An example of the content of the "task information" will be described later. The "scheduling" mentioned here means that, for a task in which the planned start time and the planned end time are not set, at least one of the planned start time and the planned end time is set or, for a task in which at least one of the planned start time and the planned end time is set, the set planned start time or the planned end time is changed and reset the planned time. The "schedule" mentioned here means the information indicating the result of "scheduling". The "schedule" that is displayed in a manner that can be recognized by a person by the sense of sight, hearing, smell, or the like is referred to as a "timetable".

### Configuration of the scheduling support device

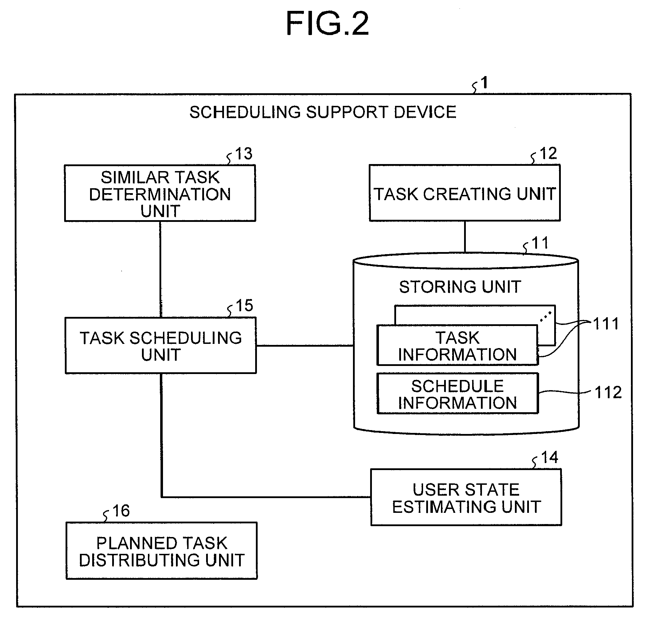

The configuration is the scheduling support device 1 included in the scheduling support system 9 will be described with reference to FIG. 2. FIG. 2 is a functional block diagram illustrating the configuration of the scheduling support device according to the embodiment. As illustrated in FIG. 2, the scheduling support device 1 includes a storing unit 11, a task creating unit 12, a similar task determination unit 13, a user state estimating unit 14, a task scheduling unit 15, and a planned task distributing unit 16.

The storing unit 11 corresponds to a storage device, such as a nonvolatile semiconductor memory device including, for example, a flash memory, a Ferroelectric Random Access Memory (FRAM) (registered trademark), or the like. Furthermore, the storing unit 11 includes task information 111 and schedule information 112. The task information 111 includes therein a plurality of pieces of task information. The schedule information 112 is information on a schedule indicating the result of the scheduling.

The task creating unit 12 creates task information. For example, the task creating unit 12 creates a plurality of pieces of task information that define the content of the task that is executed by an executor of the task. The task creating unit 12 stores the created plurality pieces of task information in the storing unit 11.

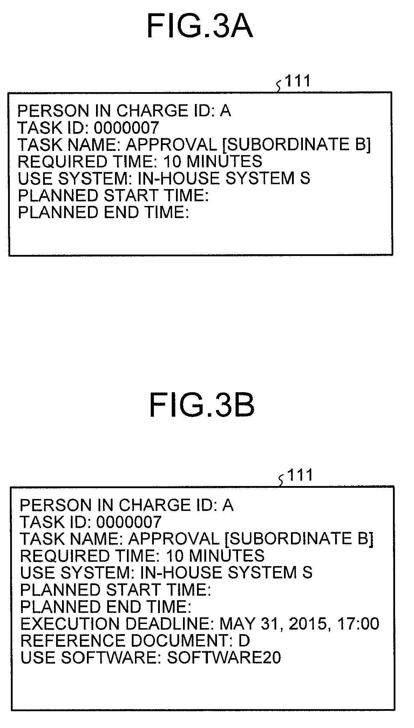

In the following, the content of the task information 111 will be described with reference to FIGS. 3A and 3B. FIG. 3A is a schematic diagram illustrating an example of the content of task information according to the embodiment. As illustrated in FIG. 3A, in the task information 111, the "person in charge ID", the "task ID", the "task name", the "required time", the "use system", the "planned start time", and the "planned end time" are defined. The "person in charge ID" is information on the item that specifies a person who executes the subject task and, in this example, a "person A" is set as the value of the item. The "task ID" is information on the item that is uniquely allocated to each of the tasks and, in this example, "0000007" is set as the value of the item. The "task name" preferably simply expresses the content of the task such that an executor of the task can easily understand the content of the task and, in this example, "approval [subordinate B]" that indicates an approval with respect to a subordinate B is set as the value of the item. The "required time" indicates the target time taken to execute the task and the required time may also be determined by using, for example, the average time taken to execute the subject task from the past track record. In this example, "10 minutes" is set as the value of the "required time". The "use system" is the system that is used to execute the task and, in this example, an "in-house system S" is set as the value of the item. The "planned start time" is the time that is planned to start the task to be executed and the "planned end time" is the time that is planned to end the executed task. In this example, both are not set as the value of the items.

The task information 111 is not limited to the content illustrated in FIG. 3A and another item may also be used as the content. FIG. 3B is a schematic diagram illustrating another example of the content of task information of the embodiment. As illustrated in FIG. 3B, in the task information 111, in addition to the content illustrated in FIG. 3A, the "execution deadline", the "reference document", and the "use software" are defined. The "execution deadline" indicates the execution deadline of the task and, in this example, "May 31, 2015, 17:00" is set as the value of the item. The "reference document" indicates the document to be referred to execute the task and, in this example, "D" is set as the value of the item. The "use software" indicates software or an application that is used to execute the task and, in this example, "SOFTWARE20" is set as the value of the item.

Furthermore, the task information 111 is not limited to the content illustrated in FIGS. 3A and 3B and any content may also be used as long as the content is in accordance with the task.

A description will be given here by referring back to FIG. 2. If the similar task determination unit 13 detects a new task, the similar task determination unit 13 determines the similarity between the task information 111 on the new task and the plurality of pieces of the task information 111 that defines the plurality of tasks that have already been subjected to the scheduling. For example, the similar task determination unit 13 compares each of the items and each of the values of the task information 111 on the new task with each of the items and each of the values of the pieces of the task information 111 on the plurality of tasks that have already been subjected to the scheduling. The similar task determination unit 13 determines, from among the plurality of tasks that have already been subjected to the scheduling, the task indicated by the task information 111 that has the item and value that are in common with the task information 111 on the new task as the similar task. Then, the similar task determination unit 13 may also determine, as the number of common items and values is increased, that the similarity is high and, even if the common item and value are only one, if the item is previously determined, the similar task determination unit 13 may also determine that the similarity is high. As an example, it is assumed that, in the task information 111, the "reference document", the "use system", the "use software", and the "implementation site" are defined. If the value of the item of the "reference document" related to the new task and the value of the item of the "reference document" related to a task a from among the plurality of tasks are common, it is determined that both are similar tasks. If the value of the item of the "implementation site" related to the new task and the value of the item of the "implementation site" related to the task a and a task b from among the plurality of tasks are common, it is determined that they are similar tasks.

The user state estimating unit 14 estimates a user state on the basis of a state change of the user. For example, the user state estimating unit 14 acquires biometric information on a user from the user interface device 2 and estimates a user state on the basis of the acquired biometric information on the user. Namely, if the biometric information on the user is the value indicating a stress, when the stress value is equal to or greater than a predetermined value or when the stress value is increased, the user state estimating unit 14 estimates, as the user state, that the power of concentration of the user with respect to the task that is being executed is decreased. Furthermore, the user state estimating unit 14 acquires an execution status of the task that is being executed from the user interface device 2 and estimates a user state on the basis of the acquired execution status of the task. Namely, if the execution status of the task that is being executed is a progress rate, the user state estimating unit 14 estimates, as the user state when the progress rate is decreased, that the power of concentration of the user with respect to the task that is being executed is decreased. Furthermore, the user state estimating unit 14 may also estimate a user state on the basis of the biometric information on the user and on the basis of the execution status of the task that is being executed.

Furthermore, as the result of the estimation, if the user state estimating unit 14 estimates that the power of concentration is decreased as the user state, the user state estimating unit 14 requests the task scheduling unit 15 to perform the re-scheduling of tasks due to a change in the state of the user. Furthermore, the execution status of the task is described as the progress rate; however, in addition to the progress rate, the progress rate to which the execution deadline is added may also be used. In the following, a description will be given with the assumption that an execution status of a task is the progress rate to which the execution deadline is added. Furthermore, the estimated user state has been described as the power of concentration of a user with respect to a task; however, the estimated user state is not limited to this.

The task scheduling unit 15 determines an execution plan for a new task and creates a schedule on the basis of the similarity between the task information 111 on the new task and the task information 111 on the plurality of tasks that have already been subjected to the scheduling. For example, the task scheduling unit 15 acquires, from the similar task determination unit 13, the similarity between the task information 111 on the new task and the task information 111 on the plurality of tasks that have already been subjected to the scheduling. The task scheduling unit 15 determines a candidate for the execution plan for the new task at the position continued from the task or the task group with a high similarity. If the cumulative total of the required time of the task or the task group with a high similarity to the new task does not exceed the predetermined set range, the task scheduling unit 15 determines that the position that is determined as the candidate for the execution plan as the position of the execution plan for the new task. If the cumulative total of the required time of the task or the task group with a high similarity to the new task exceeds the predetermined set range, the task scheduling unit 15 creates a schedule by dividing the similar task group that includes therein the new task into pieces. The previously set range mentioned here is the range of the estimated time during which the execution efficiency is increased caused by continuously executing the similar tasks. As an example, 4 hours can be represented; however, the range is not limited to this. Furthermore, if there is a plurality of task groups each having similarity to the new task, the task group with a high similarity is selected with priority. Then, the task scheduling unit 15 sets the created schedule to the schedule information 112. Furthermore, if a request for changing the execution date and time is received with respect to the task that has been subjected to the scheduling, the task scheduling unit 15 performs the re-scheduling such that the tasks with a high similarity are arranged before and after the changed task.

Furthermore, if the re-scheduling is requested due to a state change of a user, the task scheduling unit 15 changes the schedule of the task on the basis of the execution status of the task that is being executed. For example, if the task scheduling unit 15 receives a request for the re-scheduling due to the state change of the user from the user state estimating unit 14, the task scheduling unit 15 determines, on the basis of the progress rate and the execution deadline of the task that is being executed, both the task that needs to change its schedule and the timing thereof and then changes the schedule in accordance with the determination result. Then, the task scheduling unit 15 sets the changed schedule in the schedule information 112.

As an example, if the progress rate of the task that is being executed is less than a reference value (for example, 90%) and if the execution deadline can be extended, the task scheduling unit 15 changes the schedule such that the task that is being executed is changed to another task at the current timing. Namely, because the task that is being executed is still not likely to be finished and the execution deadline can be extended, the scheduling is performed such that the task that is being executed is suspended and the task subsequent to the suspended task falls on the task with a low similarity. In such a case, the subsequent task may also be the task with the required time longer than the average time. Consequently, by allowing a user to execute the task with a low similarity at the timing at which the power of concentration of the user is decreased, the task scheduling unit 15 can make an executor feel refreshed and reduce the time for which the work efficiency is low.

As another example, if the progress rate of the task that is being executed is less than a reference value (for example, 90%) and if the execution deadline is not bale to be extended, the task scheduling unit 15 changes the schedule such that the task that is being executed is changed to another task at the current timing and is resumed after the other task. Namely, because the task that is being executed is still not likely to be finished and the execution deadline is not able to be extended, the task that is being executed is suspended for a while and the scheduling is performed such that the task with a low similarity is to be executed during the suspended time. In such a case, the task to be executed at the time of suspension may also be the task with the required time shorter than the average time of the task. Furthermore, the task at the time of suspension may also be a task that indicates a break. Consequently, by allowing a user to execute the task with a low similarity at the timing at which the power of concentration of a user is decreased, the task scheduling unit 15 can make an executor feel refreshed and reduce the time for which the work efficiency is low.

As another example, if the progress rate of the task that is being executed is equal to or greater than a reference value (for example, 90%), the task scheduling unit 15 changes the schedule of the subsequent task at the timing at which the task that is being executed is ended. Namely, because the task that is being executed is likely to be finished, the scheduling is performed such that the task that is being executed is continuously executed and the task subsequent to the task that is being executed falls on the task with a low similarity. Consequently, even if the power of concentration of a user is decreased, if the task that is being executed will be completed in a short time, the task scheduling unit 15 can allow the user to complete the task that is being executed and increase the work efficiency of the task that is being executed. Furthermore, the task scheduling unit 15 can reduce the psychological cost that occurs when the task that is being executed is switched.

The planned task distributing unit 16 distributes the tasks that have been subjected to the scheduling to an executor of the tasks. For example, when the planned task distributing unit 16 detects, on the basis of the schedule information 112, the task that reaches the planned start time, the planned task distributing unit 16 refers to the task information 111 on the detected task and distributes the task information 111 on the detected task to the user interface device 2 that is associated with the person in charge ID. Furthermore, the planned task distributing unit 16 may also refer to the task information 111 on the detected task and may also distribute, if software that is used when the detected task is executed is set, this software together with the task information 111.

### Configuration of the user interface device

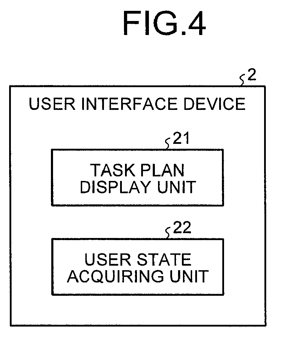

The configuration of the user interface device 2 included in the scheduling support system 9 will be described with reference to FIG. 4. FIG. 4 is a functional block diagram illustrating the configuration of a user interface device according to the embodiment. As illustrated in FIG. 4, the user interface device 2 includes a task plan display unit 21 and a user state acquiring unit 22.

The task plan display unit 21 displays the information on the planned task. For example, when the task plan display unit 21 receives the task information 111 on a predetermined task from the scheduling support device 1, the task plan display unit 21 displays the task information 111 on a monitor as the information on the planned task.

The user state acquiring unit 22 acquires a user state. For example, the user state acquiring unit 22 acquires a state of a user as the biometric information of the user from a sensor. A stress value is used for, as an example, the biometric information of the user. The user state acquiring unit 22 acquires the execution status of the task that is being executed from a use system. Then, the user state acquiring unit 22 sends the acquired biometric information on the user and the execution status of the task that is being executed to the scheduling support device 1. The transmission timing may also be the timing at which the biometric information on the user is remarkably changed. Furthermore, the transmission timing may also be periodical timing or may also be random timing other than the timing at which the biometric information on the user is remarkably changed.

### Flowchart of the scheduling support process

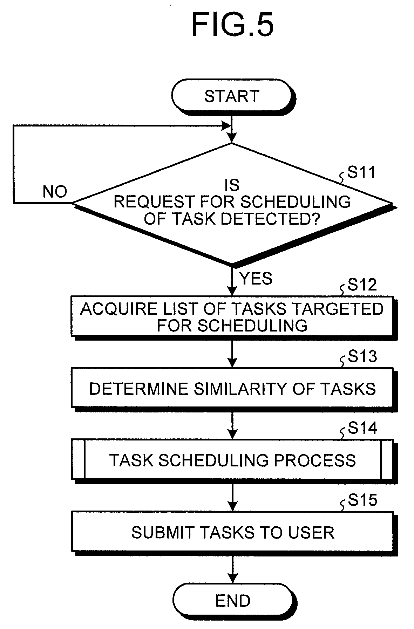

In the following, the flow of the scheduling support process according to the embodiment will be described with reference to FIG. 5. FIG. 5 is a flowchart illustrating the flow of a scheduling support process according to the embodiment.

As illustrated in FIG. 5, the task scheduling unit 15 determines whether a request for the scheduling of a task is detected (Step S11). If it is determined that request for the scheduling of a task is not detected (No at Step S11), the task scheduling unit 15 repeats the determination process until the task scheduling unit 15 detects the subject request.

In contrast, if it is determined that request for the scheduling of a task is detected (Yes at Step S11), the task scheduling unit 15 acquires, as a new task, the list of the tasks targeted for the scheduling (Step S12).

Then, the similar task determination unit 13 determines the similarity of the tasks regarding each of the tasks in the acquired task list (Step S 13). For example, the similar task determination unit 13 sequentially selects the tasks in the acquired task list. Then, the similar task determination unit 13 compares each of the items and each of the values of the task information 111 on the selected tasks with each of the items and each of the values of the task information 111 on the plurality of tasks that have already been subjected to the scheduling. The similar task determination unit 13 determines that both the tasks that have the common item and the common value as the tasks with a high similarity. The similar task determination unit 13 sequentially performs the similarity determination process regarding to the tasks in the task list.

Then, the task scheduling unit 15 performs the task scheduling process on each of the tasks in the acquired task list (Step S 14). Furthermore, the flowchart of the task scheduling process will be described later.

Then, the planned task distributing unit 16 submits each of the tasks that have been subjected to the scheduling to each of the users (Step S15). For example, if the planned task distributing unit 16 detects a task that reaches the planned start time, the planned task distributing unit 16 refers to the task information 111 on the detected task and sends the task information 111 on the detected task to the user interface device 2 associated with the person in charge ID.

### Flowchart of the task scheduling process

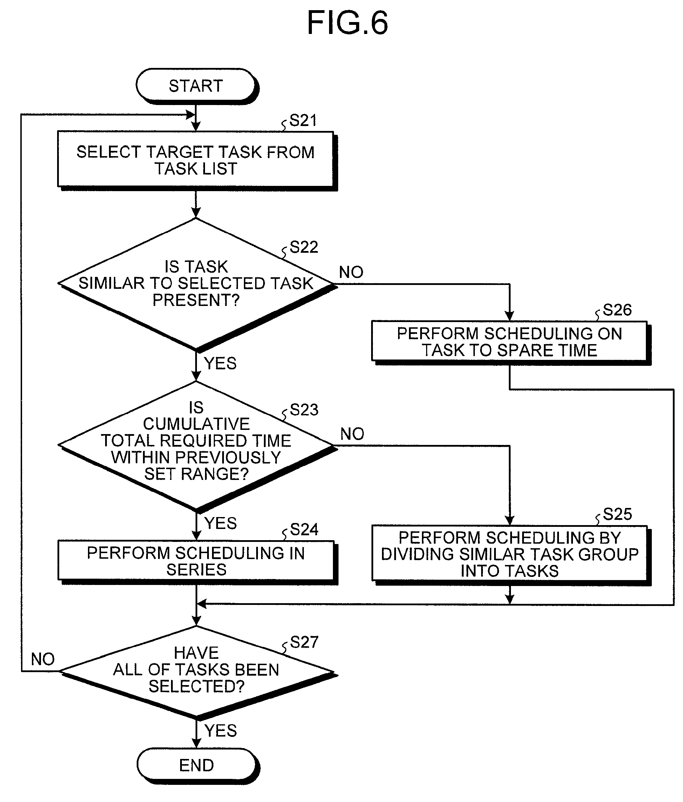

In the following, the flow of the task scheduling process will be described with reference to FIG. 6. FIG. 6 is a flowchart illustrating the flow of a task scheduling process.

The task scheduling unit 15 selects a target task from the task list (Step S21). The task scheduling unit 15 determines whether a task similar to the selected task is present (Step S22). Namely, the task scheduling unit 15 determines whether there is a task that is determined to have a high similarity to the selected new task from among the plurality of tasks that have been subjected to the scheduling by the similar task determination unit 13.

If it is determined that the task similar to the selected task is present (Yes at Step S22), the task scheduling unit 15 determines whether the cumulative total required time of the selected task and the similar task is within the previously set range (Step S23). If it is determined that the cumulative total required time is within the previously set range (Yes at Step S23), the task scheduling unit 15 performs the scheduling of the selected task continued from the similar task (Step S24). Then, the task scheduling unit 15 proceeds to Step S27.

In contrast, if it is determined that the cumulative total required time is not within the previously set range (No Step S23), the task scheduling unit 15 performs the scheduling by dividing the similar task group that includes therein the selected task into pieces (Step S25). This is because the execution efficiency is decreased if the similar tasks are continuously executed in excess of the previously set range. Then, the task scheduling unit 15 proceeds to Step S27.

At Step S22, if it is determined that there is no task similar to the selected task (No at Step S22), the task scheduling unit 15 performs the scheduling such that the selected task is allocated to the spare time (Step S26). Then, the task scheduling unit 15 proceeds to Step S27.

At Step S27, the task scheduling unit 15 determines whether all of the tasks have been selected from the target task list (Step S27). If it is determined that all of the tasks have not been selected from the target task list (No at Step S27), the task scheduling unit 15 proceeds to Step S21 in order to select the subsequent task.

In contrast, if it is determined that all of the tasks have been selected from the target task list (Yes at Step S27), the task scheduling unit 15 ends the task scheduling process.

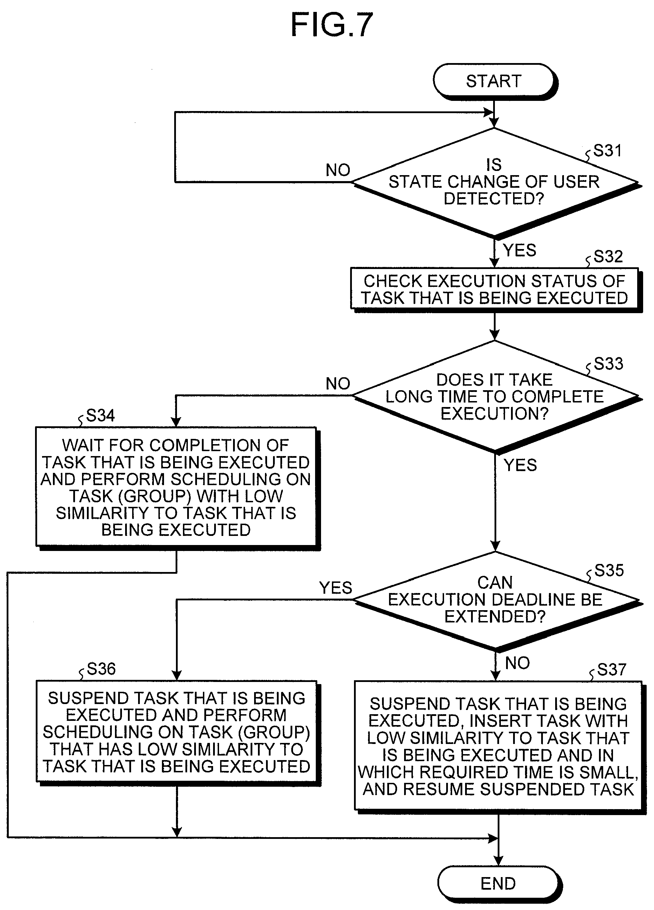

In the following, the flow of the task scheduling process when a state change of a user is detected will be described with reference to FIG. 7. FIG. 7 is a flowchart illustrating the flow of a task scheduling process performed when a state change of a user is detected.

The user state estimating unit 14 determines whether a state change of a user is detected (Step S31). For example, the user state estimating unit 14 acquires the biometric information on the user from the user interface device 2 and detects the state change of the user on the basis of the acquired biometric information. As an example, if the biometric information is a value that indicates a stress, if the stress value is increased, the user state estimating unit 14 detects the state change of the user that indicated a decrease in the power of concentration of the user.

If it is determined that the state change of the user is not detected (No at Step S31), the user state estimating unit 14 repeats the determination process until the user state estimating unit 14 detects the state change of the user. In contrast, if it is determined that the state change of the user is detected (Yes at Step S31), the user state estimating unit 14 checks the execution status of the task that is being executed (Step S32). The execution status of the task is indicated by, as an example, the progress rate in which the execution deadline is added.

The task scheduling unit 15 determines, for the execution status of the task that is being executed, whether it takes a long time to complete the execution (Step S33). For example, the task scheduling unit 15 determines whether the progress rate of the task that is being executed is less than the reference value.

If it is determined that it takes a long time to complete the execution (No at Step S33), the task scheduling unit 15 waits for the completion of the task that is being executed and performs the scheduling of the task (group) that has a low similarity to the task that is being executed (Step S34). Namely, because the task that is being executed is likely to be ended soon, the task scheduling unit 15 allows the task that is being executed to be continuously executed and performs the re-scheduling such that the task that is subsequent to the task that is being executed falls on the task with a low similarity to the task that is being executed. Consequently, even if the power of concentration of the user is decreased, if the task that is being executed will be completed in a short time, the task scheduling unit 15 can complete the task that is being executed and increase the work efficiency of the task that is being executed. Then, the task scheduling unit 15 ends the task scheduling process.

In contrast, if it is determined that it takes a long time to complete the execution (Yes at Step S33), the task scheduling unit 15 determines whether the execution deadline can be extended (Step S35). If it is determined that the execution deadline can be extended (Yes at Step S35), the task scheduling unit 15 suspends the task that is being executed and performs the scheduling of the task (group) that has a low similarity to the task that is being executed (Step S36). Namely, because the task that is being executed is still not likely to be ended and the execution deadline can be extended, the task scheduling unit 15 suspends the task that is being executed and performs the re-scheduling such that the task that is subsequent to the suspended task falls on the task with a low similarity to the task that is being executed. Consequently, by executing the task with a low similarity at the timing at which the power of concentration of the user is decreased, the task scheduling unit 15 can make an executor feel refreshed and reduce the time for which the work efficiency is low. Then, the task scheduling unit 15 ends the task scheduling process.

In contrast, if it is determined that the execution deadline is not able to be extended (No at Step S35), the task scheduling unit 15 performs the scheduling as follows. Namely, the task scheduling unit 15 performs the scheduling such that the task that is being executed is suspended, the task that has low a similarity to the task that is being executed and that has short required time is inserted, and the suspended task is resumed (Step S37). The inserted task may also be a task that indicates a rest. Namely, because the task that is being executed is still not likely to be ended and the execution deadline is not able to be extended, the task scheduling unit 15 performs the re-scheduling such that the task that is being executed is suspended and the task that is to be executed during the suspended task being suspended is allocated to the task with a low similarity. Consequently, by executing the task having a low similarity at the timing at which the power of concentration of a user is decreased, the task scheduling unit 15 can make an executor feel refreshed and reduce the time for which the work efficiency is low. Then, the task scheduling unit 15 ends the task scheduling process.

### Specific example of the task scheduling process

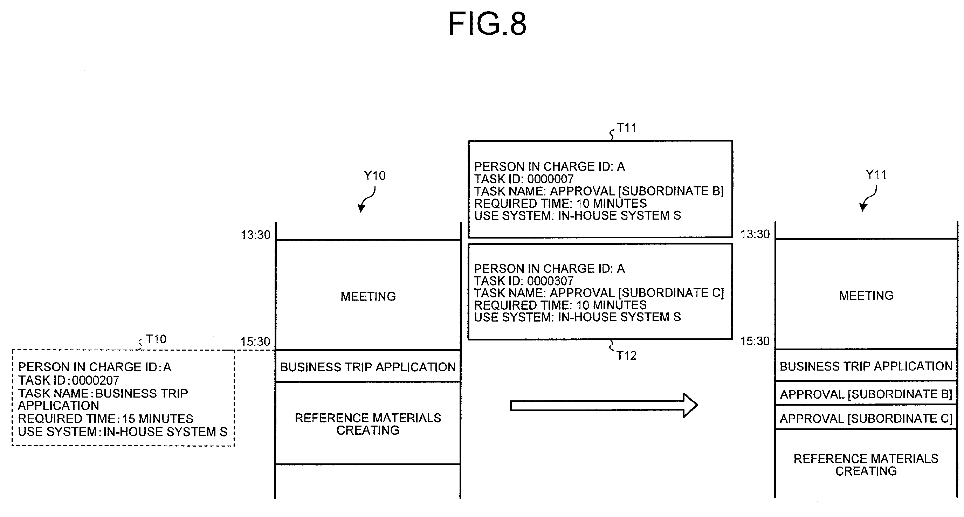

FIG. 8 is a schematic diagram illustrating a specific example of the task scheduling process according to the embodiment. In the example illustrated in FIG. 8, it is assumed that, because each of a subordinate B and a subordinate C has submitted an approval to a person A, the person A is requested to perform a task with the task name of "approval [subordinate B]" and a task with the task name of "approval [subordinate C]". T11 corresponds to the task information 111 on the task with the task name of "approval [subordinate B]". T12 corresponds to the task information 111 on the task with the task name of "approval [subordinate C]". The symbol Y10 is a timetable of the person A before the scheduling of T11 and T12 is performed. In Y10, the task with the task name of "business trip application" is scheduled to be started at 15:30. The symbol T10 corresponds to the task information 111 on the task with the task name of "business trip application". Furthermore, it is assumed that the previously set range that is used to determine the cumulative total of the required time is 4 hours.

Under this state, the similar task determination unit 13 determines the similarity between the task information T11 on the newly requested "approval [subordinate B]" task and the task information on the plurality of tasks that have already been subjected to the scheduling. The similar task determination unit 13 determines the similarity between the task information T12 on the newly requested "approval [subordinate C]" task and the task information on the plurality of tasks that have already been subjected to the scheduling. At this point, regarding the task information T11 on the "approval [subordinate B]" task and the task information T10 on the "business trip application" task, both the use systems are "in-house system S", which are in common related to the use systems. Accordingly, the similar task determination unit 13 determines that the task information T11 and T10 have a high similarity. Similarly, regarding the task information T12 of the "approval [subordinate C]" task and the task information T10 of the "business trip application" task, both the use systems are "in-house system S", which are in common related to the use systems. Accordingly, the similar task determination unit 13 determines that the task information T12 and T10 have a high similarity.

Then, the task scheduling unit 15 performs the scheduling of the candidate for the execution plan for the new "approval [subordinate B]" task at the position continued from the task that has a high similarity. Here, because the "approval [subordinate B]" task and the "business trip application" task have a high similarity, the task scheduling unit 15 decides the candidate for the execution plan for the "approval [subordinate B]" task at the position continued from the "business trip application" task. Because the "approval [subordinate C]" task and the "business trip application" task have a high similarity, the task scheduling unit 15 decides the candidate for the execution plan for the "approval [subordinate C]" task at the position continued from the "business trip application" task. Furthermore, it is assumed that the "reference materials creating" task that is scheduled in Y10 and that is continued from the "business trip application" task is the task of the plan that can be moved.

Then, because the cumulative total of the required time of the new "approval [subordinate B]" task and the "business trip application" task is 25 minutes and does not exceed the previously set range, the task scheduling unit 15 determines the position determined as the candidate for the execution plan as the position of the execution plan. Namely, the task scheduling unit 15 determines the position of the execution plan for the "approval [subordinate B]" task at the position continued from the "business trip application" task.

Then, because the cumulative total of the required time of the new "approval [subordinate C]" task, the new "approval [subordinate B]" task, and the "business trip application" task is 35 minutes and does not exceed the previously set range, the task scheduling unit 15 determines the position determined as the candidate for the execution plan as the position of the execution plan. Namely, the task scheduling unit 15 determines the position of the execution plan for the "approval [subordinate C]" task at the position, as illustrated by Y11, continued from the "business trip application" task and the "approval [subordinate B]" task.

Consequently, because the task scheduling unit 15 can eliminate the time to start up the use system every time a task is started, it is possible to reduce the time before a user starts the subsequent task. Namely, because the task scheduling unit 15 performs the scheduling such that the plurality of tasks used by the common use system are continuously executed, it is possible to reduce the time before a user starts the subsequent task.

Another specific example of the task scheduling process

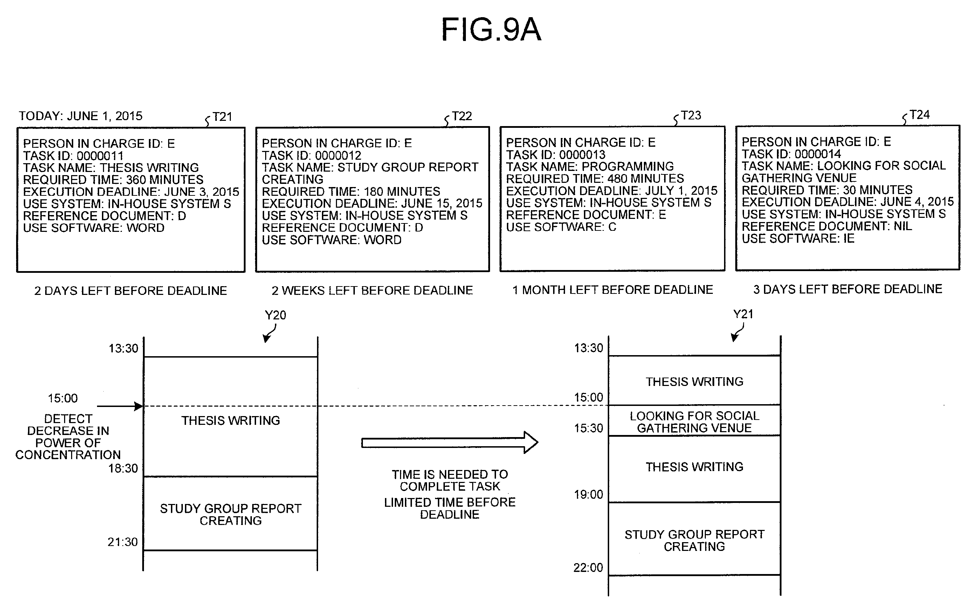

FIGS. 9A to 9C are schematic diagrams each illustrating another specific example of the task scheduling process according to the embodiment. In the examples illustrated in FIGS. 9A to 9C, it is assumed that a person E currently executing the task with the task name of "thesis writing". The symbol T21 corresponds to the task information 111 on the task with the task name of "thesis writing". Then, the person E plans to execute, in addition to the "thesis writing" task, the "study group report creating" task, the "programming" task, and the "looking for a social gathering venue" task. The symbol T22 corresponds to the task information 111 on the "study group report creating" task. The symbol T23 corresponds to the task information 111 on the "programming" task. The symbol T24 corresponds to the task information 111 on the "looking for a social gathering venue" task. Y20 corresponds to the timetable of the person E that has already been subjected to the scheduling.

As illustrated in FIG. 9A, it is assumed that the user state estimating unit 14 detects a decrease in the power of concentration of the person E at 15:00 at which the "thesis writing" task is being executed by the person E. In such a case, the user state estimating unit 14 acquires the execution status of the "thesis writing" task that is being executed. Here, it is assumed that the execution status of the "thesis writing" task is in a state in which time is needed to complete the task and is in a state of having limited time before the deadline because it is two days left before the deadline.

Then, the task scheduling unit 15 performs the scheduling such that the "thesis writing" task that is being executed is suspended, the task that that has a low similarity to the "thesis writing" task and that has short required time is inserted, and the task that is to be suspended is resumed. The task to be inserted is decided as follows.

Regarding the task information T21 on the "thesis writing" task and the task information T22 on the "study group report creating" task, because the use system, the reference document, and the use software are in common, it is determined that the tasks have a high similarity. Regarding the task information T21 on the "thesis writing" task and the task information T23 on the "programming" task, only the use system is in common; however, it is determined that the tasks have a low similarity to the "study group report creating" task in which the three items are in common. Regarding the task information T21 on the "thesis writing" task and the task information T24 on the "looking for a social gathering venue" task, only the use system is in common; however, it is determined that the tasks have a low similarity to the "study group report creating" task and it is determined that the tasks have the same similarity to the "programming" task. The task with a low similarity to the "thesis writing" task is the "programming" task and the "looking for a social gathering venue" task. Between these two tasks, regarding the "looking for a social gathering venue" task, the required time is 30 minutes that is less than the required time of 480 minutes that is needed for the "programming" task. Accordingly, the task scheduling unit 15 determines the task that has a low similarity to the "thesis writing" task and that needs a short required time as the "looking for a social gathering venue" task.

Consequently, the task scheduling unit 15 performs the scheduling such that the "thesis writing" task that is being executed is suspended, the "looking for a social gathering venue" task that has a low similarity to the "thesis writing" task and that needs a short required time is inserted, and the task to be suspended is resumed. The symbol Y21 is the timetable after the task scheduling process has been performed when a decrease in the power of concentration of the person E is detected. According to Y21, the scheduling is set such that the "thesis writing" task is suspended at 15:00 at which a decrease in the power of concentration is detected, the "looking for a social gathering venue" task is inserted, and the "thesis writing" task is resumed.

Consequently, if the power of concentration of a user is decreased, by allowing the user to execute the task with a low similarity, the task scheduling unit 15 can make the user feel refreshed and reduce the time for which the work efficiency is low. Namely, the task scheduling unit 15 can reduce the time for which the power of concentration is decreased and the work efficiency is low.

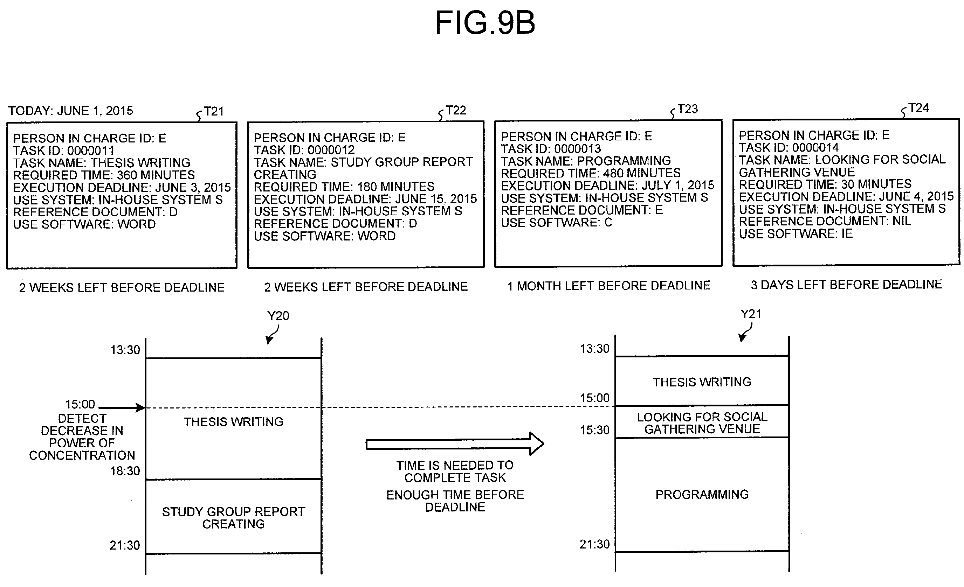

As illustrated in FIG. 9B, it is assumed that the user state estimating unit 14 detects a decrease in the power of concentration of the person E at 15:00 at which the "thesis writing" task is being executed. In such a case, the user state estimating unit 14 acquires the execution status of the "thesis writing" task that is being executed. Here, it is assumed that the execution status of the "thesis writing" task is in a state in which time is needed to complete the task and is in a state of having enough time left before the deadline because it is two weeks left before the deadline.

Then, the task scheduling unit 15 performs the scheduling such that the "thesis writing" task that is being executed is suspended and the task with a low similarity to the "thesis writing" task is executed. The task with a low similarity to the "thesis writing" task is decided to be the "looking for a social gathering venue" task and the "programming" task.

Consequently, the task scheduling unit 15 performs the scheduling such that the "thesis writing" task that is being executed is suspended and the "looking for a social gathering venue" task and the "programming" task that are the tasks with a low similarity to the "thesis writing" task are to be executed. The symbol Y21 is the timetable after the task scheduling process has been performed when a decrease in the power of concentration of the person E is detected. According to Y21, the scheduling is performed such that the "thesis writing" task is suspended at 15:00 at which a decrease in the power of concentration is detected and the "looking for a social gathering venue" task and the "programming" task are to be executed.

Consequently, if the power of concentration of a user is decreased, by allowing the user to execute the task with a low similarity, the task scheduling unit 15 can make the user feel refreshed and reduce the time for which the work efficiency is low. Namely, the task scheduling unit 15 can reduce the time for which the power of concentration is decreased and the work efficiency is low.

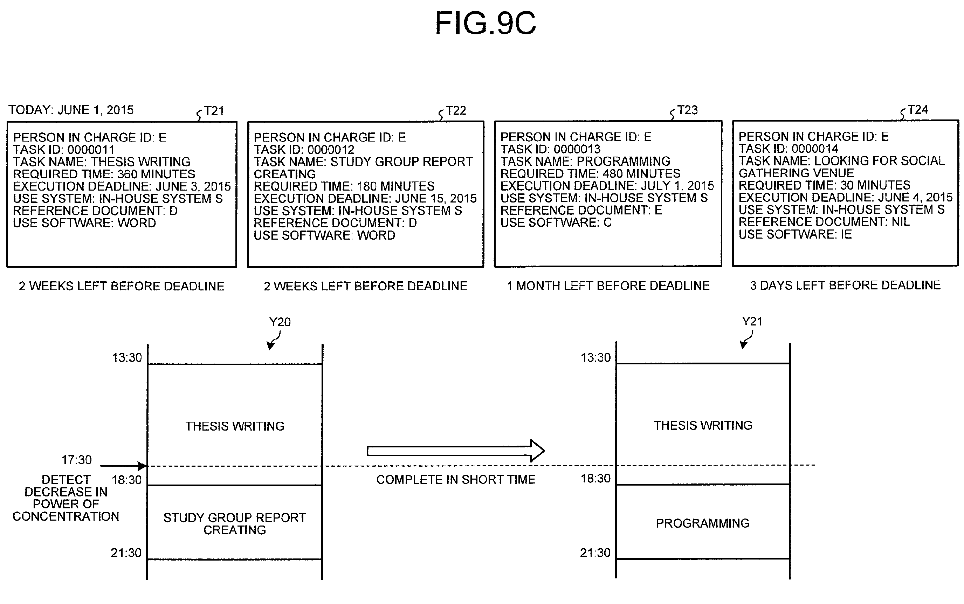

As illustrated in FIG. 9C, it is assumed that the user state estimating unit 14 detects a decrease in the power of concentration of the person E at 17:30 at which the "thesis writing" task is being executed. In such a case, the user state estimating unit 14 acquires the execution status of the "thesis writing" task that is being executed. Here, it is assumed that the execution status of the "thesis writing" task is in a state in which the task will be completed in a short time.

Then, the task scheduling unit 15 performs the scheduling such that the completion of the "thesis writing" task that is being executed is waited and the task with a low similarity to the "thesis writing" task is executed. The task with a low similarity to the "thesis writing" task is decided to be the "programming" task. Furthermore, it may also decide the task with a low similarity to the "thesis writing" task as the "looking for a social gathering venue" task.

Consequently, the task scheduling unit 15 performs the scheduling such that the completion of the "thesis writing" task that is being executed is waited and the "programming" task that is the task with a low similarity to the "thesis writing" task is executed. The symbol Y21 is the timetable after the task scheduling process has been performed when a decrease in the power of concentration of the person E is detected. According to Y21, the schedule is set such that a decrease in the power of concentration at 17:30 but the "thesis writing" task is continuously executed and the "programming" task is to be executed after the "thesis writing" task has been completed.

Consequently, even if the power of concentration of a user is decreased, if the task that is being executed will be completed in a short time, the task scheduling unit 15 can complete the task that is being executed and increase the work efficiency of the task that is being executed.

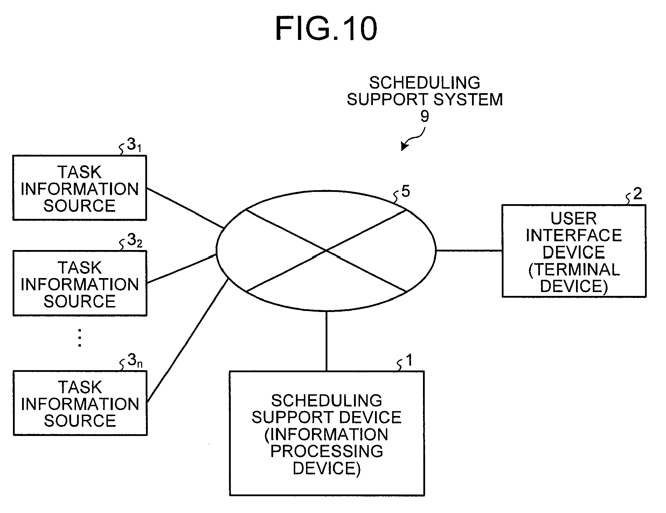

In the embodiment described above, a description has been given of a case in which the scheduling support system 9 includes the scheduling support device 1 and the user interface device 2. However, the scheduling support system 9 is not limited to this and may also be a case that includes the scheduling support device 1, the user interface device 2, and a task information source. The configuration of the scheduling support system 9 that includes the task information source will be described with reference to FIG. 10.

### Another configuration of the scheduling support system

FIG. 10 is a schematic diagram illustrating another configuration of the system that includes the scheduling support device according to the embodiment. As illustrated in FIG. 10, the scheduling support system 9 includes the scheduling support device 1, the user interface device 2, and task information sources 3₁ to 3ₙ. The task information sources 3₁ to 3ₙ create task information. Furthermore, the task information sources 3₁ to 3ₙ are, for example, servers for task management tools, such as Business Process Management (BPM) or servers for scheduler. The task information sources 3₁ to 3ₙ are connected to the scheduling support device 1 via a network 5 and the task information created by the task information source is sent to the scheduling support device 1.

In the scheduling support system 9 having this configuration, the task information sources 3₁ to 3ₙ create the plurality of pieces of the task information 111 that defines the content of the task executed by a task executor and send the task information 111 to the scheduling support device 1 via the network 5. The scheduling support device 1 that has received the plurality of the task information 111 sent from the task information sources 3₁ to 3ₙ determines, regarding to each of the pieces of the task information 111, the similarity to the task information 111 on the plurality of the tasks that have already been scheduled and performs the scheduling on the basis of the similarity.

Furthermore, with this configuration, because the task information sources 3₁ to 3ₙ create the task information, the task creating unit 12 in the scheduling support device 1 may also be eliminated.

### Advantage of the embodiment

In the embodiment described above, when the scheduling support device 1 detects a new task that is defined in the task information 111, the scheduling support device 1 determines the similarity between the task information 111 on the detected new task and the task information 111 on the plurality of tasks that have already been scheduled. The scheduling support device 1 decides a candidate for an execution plan for the new task on the basis of the similarity. Then, on the basis of the execution sequence and the task information 111 on the plurality of tasks that have already been scheduled and on the basis of the task information 111 on the new task, the scheduling support device 1 decides an execution plan of the new task from among the candidates for the execution plan for the new task and then creates a schedule. With this configuration, the scheduling support device 1 can appropriately perform the scheduling of the new task. Namely, for the new task, even if a combination of tasks that can be gathered has not been defined, the scheduling support device 1 determines the similarity by using the task information 111 on the new task and on the already scheduled task. Consequently, the scheduling support device 1 can determine the task that can be gathered to the new task and appropriately perform the scheduling of the new task.

Furthermore, in the embodiment described above, the scheduling support device 1 decides the candidate for the execution plan for the new task at the position continued from the task that has a high similarity to the new task from among the plurality of tasks that have already been scheduled. With this configuration, if it is determined the similarity is high because of, for example, the common use system, the scheduling support device 1 can eliminate the time to start up the use system every time a task is started and can reduce the time taken before a user starts the subsequent task. Furthermore, in another example, if it is determined that the similarity is high because of the common implementation site, the scheduling support device 1 can eliminate the time taken to move to the implementation site every time a task is started and can reduce the time taken before a user starts the subsequent task. Furthermore, in another example, if it is determined that the similarity is high because of the common use software, the scheduling support device 1 can eliminate the time taken to start up the use software every time a task is started and can reduce the time taken before a user starts the subsequent task.

Furthermore, in the embodiment described above, on the basis of the execution sequence and the task information 111 on the tasks with a high similarity to the new task and on the basis of the task information 111 that defines the new task, the scheduling support device 1 decides an execution plan for the new task from among the candidates for the execution plan for the new task. With this configuration, in accordance with the value of the item included in the task information 111, it is possible for the scheduling support device 1 to arrange the similar task group that includes therein the new task in series or divide the similar task group into plurality of tasks.

Furthermore, in the embodiment described above, when a task is being executed, if the scheduling support device 1 further detects a change in the state of a user who executes the task that is being executed, the scheduling support device 1 performs the following process. Namely, on the basis of the similarity between the task information 111 on the task that is being executed and the task information 111 on the new task, the scheduling support device 1 decides the execution plan for the new task and changes the schedule. With this configuration, the scheduling support device 1 can decide, by using the state of the user who currently executes the task, the execution plan for the new task on the basis of the relationship with the task that is being executed and can change the schedule.

Furthermore, in the embodiment described above, in accordance with the execution state and the execution deadline of the task that is being executed, the scheduling support device 1 decides the execution plan for the new task that has a low similarity to the task information 111 on the task that is being executed and changes the second schedule. With this configuration, when the scheduling support device 1 detects, for example, a decrease in the power of concentration of a user who executes the task that is being executed, it is possible for the scheduling support device 1 to decide to change the task that is being executed to the new task that has a low similarity to the subject task. Consequently, the scheduling support device 1 can reduce the time for which the power of concentration of the user is decreased and the work efficiency is low.

Furthermore, in the embodiment described above, if a change occurs in the execution plan for the task that that has been subjected to the scheduling in a schedule, the scheduling support device 1 performs re-scheduling such that the tasks with a high similarity are placed at the position before and after the changed task. With this configuration, the scheduling support device 1 can appropriately perform the scheduling of the changed task.

### Others

Furthermore, in the embodiment described above, the components of each device illustrated in the drawings are not always physically configured as illustrated in the drawings. In other words, the specific shape of a separate or integrated device is not limited to the drawings; however, all or part of the device can be configured by functionally or physically separating or integrating any of the units depending on various loads or use conditions. For example, the similar task determination unit 13 and the task scheduling unit 15 may also be integrated as a single unit. Furthermore, the task scheduling unit 15 may also be separated into a first scheduling unit that performs the scheduling of a new task and a second scheduling unit that performs the re-scheduling of the tasks due to a state change of a user. The storing unit 11 may also be used as an external device of the scheduling support device 1 and connected via a network.

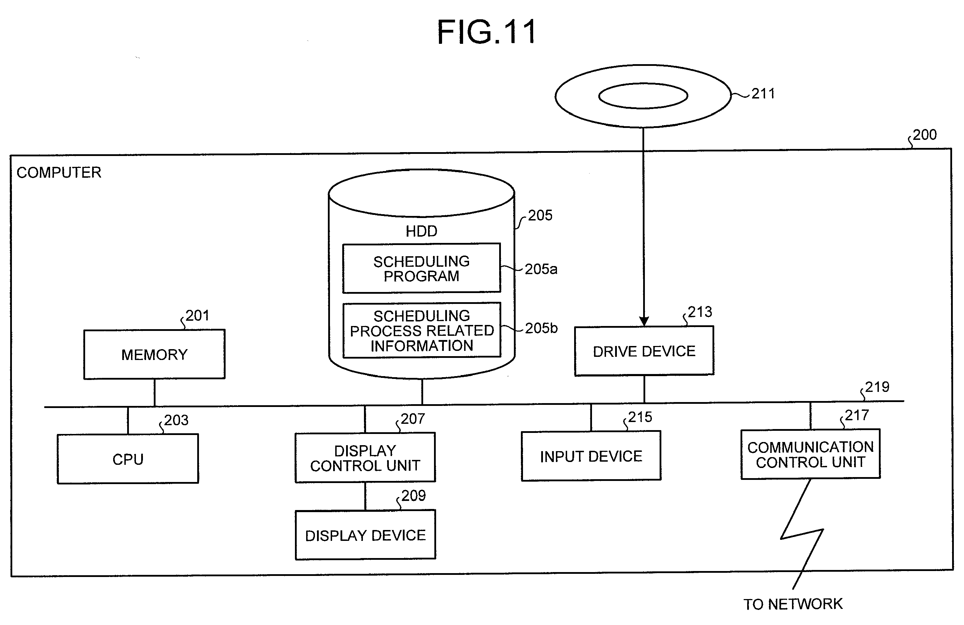

Furthermore, the various kinds of processes described in the embodiment can be implemented by a program prepared in advance and executed by a computer, such as a personal computer or a workstation. Accordingly, in the following, an example of a computer that executes a scheduling program that implements the same function as that performed by the scheduling support device 1 illustrated in FIG. 2 will be described. FIG. 11 is a schematic diagram illustrating an example of a computer that executes a scheduling program.

As illustrated in FIG. 11, a computer 200 includes a CPU 203 that executes various kinds of arithmetic processing, an input device 215 that receives an input of data from a user, and a display control unit 207 that controls a display device 209. Furthermore, the computer 200 includes a drive device 213 that reads a program or the like from a storage medium or the like and a communication control unit 217 that sends and receives data to and from another computer via a network. Furthermore, the computer 200 includes a memory 201 that temporarily stores therein various kinds of information and an HDD 205. The memory 201, the CPU 203, the HDD 205, the display control unit 207, the drive device 213, the input device 215, and the communication control unit 217 are connected by a bus 219.

The drive device 213 is a device that is used for, for example, a removable disk 211. The HDD 205 stores therein a scheduling program 205a and scheduling process related information 205b.

The CPU 203 reads the scheduling program 205a, loads the scheduling program 205a in the memory 201, and executes the scheduling program 205a as a process. The process corresponds to each of the functioning units in the scheduling support device 1. The scheduling process related information 205b corresponds to the task information 111 and the schedule information 112. Then, for example, the removable disk 211 stores therein each of the pieces of information, such as the scheduling program 205a or the like.

Furthermore, the scheduling program 205a does not need to be stored in the HDD 205 from the beginning. For example, the program is stored in a "portable physical medium", such as a flexible disk (FD), a CD-ROM, a DVD disk, a magneto-optic disk, an IC CARD, or the like, that is to be inserted into the computer 200. Then, the computer 200 may also read and execute the scheduling program 205a from the portable physical medium.

According to an aspect of an embodiment, it is possible to perform scheduling even if a task is not previously defined in a combination of tasks that can be integrated.

## Claims

1. A scheduling method comprising:
first creating (S 14), performed by a computer, on the basis of an execution sequence of a plurality of tasks that are defined by a plurality of pieces of task information, a first schedule related to the plurality of tasks;
determining (S11-S13), performed by the computer, when a new task defined by new task information is detected, the similarity between the task information on the detected new task and the plurality of pieces of task information that define the plurality of tasks that constitute the first schedule;
deciding (S14,S22), performed by the computer, on the basis of the determined similarity, a candidate for an execution plan for the new task; and
second creating (S14,S23-S25), performed by the computer, on the basis of the execution sequence and the task information on the plurality of tasks in the first schedule and on the basis of the task information on the new task, a second schedule by deciding an execution plan for the new task from among candidates for the execution plan for the new task.

2. The scheduling method according to claim 1, wherein the deciding (S24) includes deciding the candidate for the execution plan for the new task at a position continued from the task with a high similarity to the new task from among the plurality of tasks constituting the first schedule.

3. The scheduling method according to claim 2, wherein the second creating (S23-S25) includes creating, on the basis of the execution sequence and the task information on the task that has a high similarity to the new task and on the basis of the task information that defines the new task, the second schedule by deciding the execution plan for the new task from among the candidates for the execution plan of the new task.

4. The scheduling method according to any one of claims 1 to 3, wherein the second creating (S32-S37) further includes changing, when a change of a state of a user who executes the task that is being executed is detected while the task that constitutes the second schedule is being executed, on the basis of the similarity between the task information on the task that is being executed and the task information on the new task, the second schedule by deciding the execution plan for the new task.

5. The scheduling method according to claim 4, wherein the second creating (S32-S37) includes changing, in accordance with the execution state and the execution deadline of the task that is being executed, the second schedule by deciding the execution plan for a new task that has a low similarity to the task information on the task that is being executed.

6. The scheduling method according to any one of claims 1 to 5 further comprising re-scheduling, performed by the computer, when the execution plan for one of the tasks in the first schedule or the second schedule is changed, the tasks by placing tasks with a high similarity at positions before and after the changed task.

7. An information processing apparatus comprising:
a first creating unit (15) that creates, on the basis of an execution sequence of a plurality of tasks that are defined by a plurality of pieces of task information, a first schedule related to the plurality of tasks;
determination unit (13) that determines, when a new task defined by new task information is detected, the similarity between the task information on the detected new task and the plurality of pieces of task information that define the plurality of tasks that constitute the first schedule;
a candidate deciding unit (15) that decides, on the basis of the determined similarity, a candidate for an execution plan for the new task; and
a second creating unit (15) that creates, on the basis of the execution sequence and the task information on the plurality of tasks in the first schedule and on the basis of the task information on the new task, a second schedule by deciding an execution plan for the new task from among candidates for the execution plan for the new task.

8. A scheduling program that causes a computer to execute:
creating (S 14), on the basis of an execution sequence of a plurality of tasks that are defined by a plurality of pieces of task information, a first schedule related to the plurality of tasks;
determining (S13), when a new task defined by new task information is detected, the similarity between the task information on the detected new task and the plurality of pieces of task information that define the plurality of tasks that constitute the first schedule;
deciding (S 14), on the basis of the determined similarity, a candidate for an execution plan for the new task; and
creating (S 14), on the basis of the execution sequence and the task information on the plurality of tasks in the first schedule and on the basis of the task information on the new task, a second schedule by deciding an execution plan for the new task from among candidates for the execution plan for the new task.
